# EUROPÄISCHE PATENTSCHRIFT

(11) **EP 1 405 714 B1**
(45) Veröffentlichungstag und Bekanntmachung des Hinweises auf die Patenterteilung: **08.07.2009**
(21) Anmeldenummer: 03019376.7
(22) Anmeldetag: 27.08.2003
(51) Int. Cl.: B29C 67/00

(54) **Vorrichtung und Verfahren zum schichtweisen Herstellen von dreidimensionalen Objekten**
Method and apparatus for layerwise manufacturing of three dimensional objects
Dispositif et procédé pour la fabrication d'objets tridimensionels par couches successives

(30) Priorität: 30.09.2002 DE 10245617
(43) Veröffentlichungstag der Anmeldung: 07.04.2004
(73) Patentinhaber: EOS GmbH Electro Optical Systems, 82152 Krailling (DE)
(72) Erfinder: Heugel, Martin, 86899 Landsberg-Pitzling (DE)
(74) Vertreter: Hofer, Dorothea

(56) Entgegenhaltungen:
- EP-A- 0 393 677
- EP-A- 0 406 513
- EP-A- 0 492 340
- EP-A- 1 184 946
- WO-A-95/31326
- DE-A- 19 818 469
- PATENT ABSTRACTS OF JAPAN vol. 014, no. 300 (M-0991), 28. Juni 1990 (1990-06-28) & JP 02 095830 A (MATSUSHITA ELECTRIC WORKS LTD), 6. April 1990 (1990-04-06)
- PATENT ABSTRACTS OF JAPAN vol. 014, no. 221 (M-0971), 10. Mai 1990 (1990-05-10) & JP 02 052724 A (OSAKA PREFECTURE;OTHERS: 01), 22. Februar 1990 (1990-02-22)

## Beschreibung

Die vorliegende Erfindung betrifft eine Vorrichtung und ein Verfahren zum Herstellen von dreidimensionalen Objekten nach dem Oberbegriff des Patentanspruchs 1 bzw. des Patentanspruchs 4.

Bei generativen Fertigungsverfahren, wie z. B. dem Selektiven Lasersintern inklusive dem selektiven Laserschmelzen oder der Stereolithographie werden dreidimensionale Objekte schichtweise hergestellt, indem Schichten eines Aufbaumaterials aufgetragen und durch selektives Verfestigen an den dem Querschnitt der Objekte entsprechenden Stellen miteinander verbunden werden.

Ein derartiges Verfahren und eine derartige Vorrichtung sind beispielsweise aus der EP 0 734 842 bekannt, die das selektive Lasersintern von pulverförmigem Aufbaumaterial beschreibt. Dort wird eine erste Schicht eines pulverförmigen Materials auf einen absenkbaren Träger aufgebracht und an den dem Objekt entsprechenden Stellen mit einem Laser bestrahlt, so daß das Material dort zusammensintert. Danach wird der Träger abgesenkt und es wird auf diese erste Schicht eine zweite Schicht aufgebracht, die wiederum selektiv gesintert wird und dabei mit der ersten Schicht verbunden wird. Dadurch wird das Objekt schichtweise gebildet.

Erfolgt das selektive Verfestigen mittels eines Laserstrahls, so ist die Strukturauflösung bei dem zu bildenden Objekt um so höher, je kleiner der Strahlfokus auf der zu verfestigenden Schicht ist. Die Verwendung eines kleinen Strahlfokus führt aber auf der anderen Seite zu einer Erhöhung der Belichtungszeit einer ausgedehnten Schicht. Aus diesem Grunde wird beispielsweise in der EP 0 758 952 vorgeschlagen, den Querschnitt eines zu bildenden Objektes bei der Belichtung aufzuspalten in einen mit kleinem Fokus zu bestrahlenden Randbereich und einen mit großem Fokus zu bestrahlenden inneren Bereich. Dies erlaubt es, durch die Wahl eines kleinen Strahlfokus im Randbereich eine hohe Strukturauflösung zu erzielen, während die Wahl eines größeren Strahlfokus im inneren Bereich eine schnellere Verfestigung des inneren Bereichs gestattet.

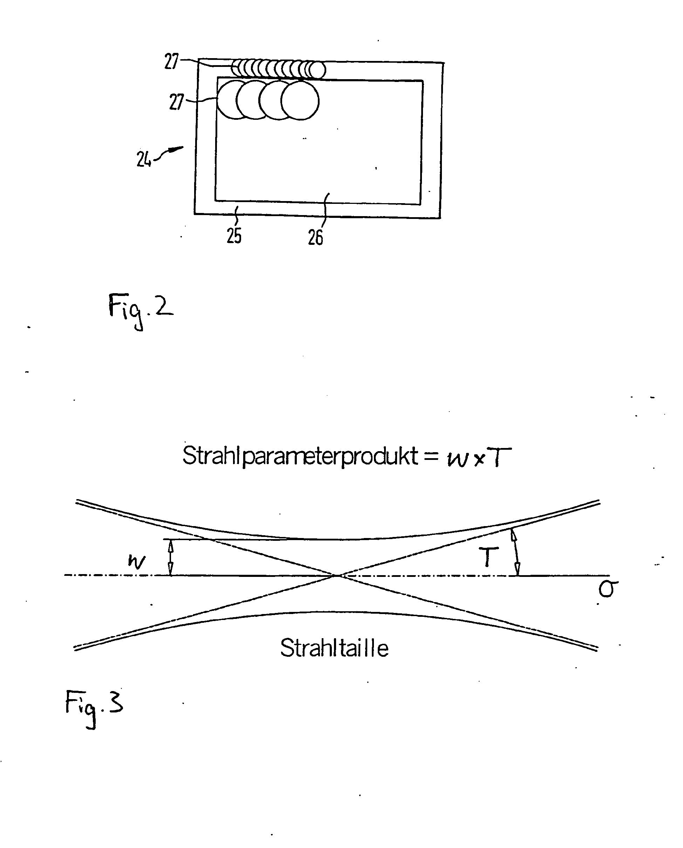

In der EP 0 758 952 wird vorgeschlagen, Strahlfokusse unterschiedlichen Durchmessers durch eine außerhalb des Lasers angeordnete Strahloptik zu erzeugen. Die Variationsmöglichkeit des Fokusdurchmessers ist dabei jedoch begrenzt, da die Fokussierbarkeit der Strahlung nicht nur von der verwendeten Optik, sondern auch von der durch die Laserstrahlquelle vorgegebenen Strahlqualität, gekennzeichnet durch das sogenannte Strahlparameterprodukt, abhängig ist. Wie aus Fig. 3 ersichtlich ist, ist das Strahlparameterprodukt definiert als das Produkt aus den Strahlkenngrößen Strahltaillenradius w und Divergenzwinkel T bezogen auf die optische Achse 0 (siehe Fig. 3). Dabei ist die Strahlqualität umso besser, je kleiner das Produkt aus Strahltaillenradius und Divergenzwinkel ist. Die bestmögliche Strahlqualität wird im sogenannten Gaußschen Grundmode erzielt und ist durch die Wellenlänge der Strahlung festgelegt.

EP-1 184 946 A1 offenbart einen Gaslaser zum Schneiden von Blechen, wobei der Laserstrahl zum Zwecke einer Anpassung an die zu schneidende Blechdicke variiert wird.

EP-0 492 340 A2 offenbart einen weiteren Gaslaser mit einer Verstellvorrichtung für ein Maschinenteil. Hier wird an der Außenseite eines Resonatorraums ein magnetischer Mitnehmer angebracht, der mittels einer magnetischen Kraft ein Maschinenteil, hier eine Modenblende verschiebt. Durch die magnetische Kraftübertragung müssen keine Löcher in den Resonatorraum gebohrt werde, wodurch Undichtigkeitsprobleme beseitigt werden.

Schließlich offenbart WO/95-31326 A eine gattungsgemäß Vorrichtung zum schichtweisen Herstellen eines dreidimensionalen Objektes mittels selektiven Verfestigens an den dem Querschnitt des Objekts entsprechenden Stellen in einer Schicht eines Aufbaumaterials unter Verwendung eines Lasers, mit einem Laser und einer Fokussiereinheit zum Bündeln der Laserstrahlung.

Es ist die zu lösende objektive technische Aufgabe der vorliegenden Erfindung, eine Vorrichtung und ein Verfahren zum Herstellen von dreidimensionalen Objekten bereit zu stellen, die den Fokusdurchmesser und die Gesamtleistung an die Belichtungsanforderungen in unterschiedlichen Bereichen eines herzustellenden Objekts anpassen können.

Die Aufgabe wird gelöst durch eine Vorrichtung nach Anspruch 1 bzw. ein Verfahren nach Anspruch 4.

Weiterbildungen der Erfindung sind in den Unteransprüchen beschrieben.

Weitere Merkmale und Zweckmäßigkeiten der Erfindung ergeben sich aus der Beschreibung von Ausführungsbeispielen anhand der Figuren. Von den Figuren zeigen:
- Fig. 1: eine schematische Darstellung einer Vorrichtung gemäß einer ersten Ausführungsform der vorliegenden Erfindung,
- Fig. 2: eine schematische Darstellung eines beispielhaften Querschnitts eines herzustellenden Objektes.
- Fig. 3: eine schematische Darstellung zur Veranschaulichung des Strahlparameterprodukts.

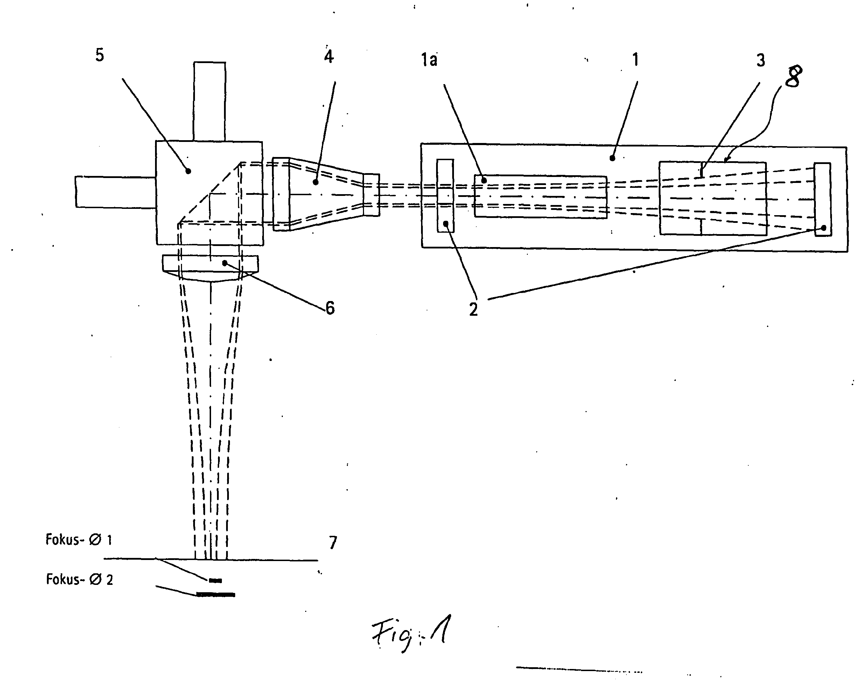

Fig. 1 zeigt eine Vorrichtung einer ersten Ausführungsform der Erfindung. Der in Fig. 1 dargestellte Laser 1 enthält ein laseraktives Medium 1a und einen aus zwei Spiegeln 2 bestehenden Resonator. Der von dem Laser 1 emittierte Laserstrahl wird durch eine Strahlablenkeinheit 5 auf zu verfestigende Bereiche einer Schicht 7 gerichtet. Zwischen den Laser 1 und die Strahlablenkeinheit 5 ist eine Einheit zur Strahlaufweitung 4 in den Strahlengang eingebracht. Zwischen der Strahlablenkeinheit 5 und der Ebene der zu verfestigenden Schicht 7 ist eine Fokussiereinheit 6 zum Fokussieren des Strahls in der Ebene der zu verfestigenden Schicht 7 in den Strahlengang eingebracht. Durch eine Schaltvorrichtung 8 kann eine in den Resonator eingebrachte Modenblende 3 variiert werden.

Das Vorsehen einer kleinen Modenblende führt zu einer Unterdrückung von TEM-Moden höherer Ordnung in dem Laser. Für maximale Strahlqualität schwingt die Strahlung in diesem Falle idealerweise nur noch im Gaußschen Grundmode an, bei dem die Intensitätsverteilung bezüglich Querschnitten senkrecht zur optischen Achse gaußförmig ist. Das Strahlparameterprodukt erreicht hierbei sein von der Wellenlänge der Strahlung abhängiges Minimum. Bei gegebener Wellenlänge ist damit laserseitig das physikalische Optimum bezüglich Fokussierbarkeit erreicht. Eine Beeinflussung des Fokusdurchmessers kann nun nur noch durch die Auslegung des nachgeschalteten optischen Systems in Form einer Variation von Arbeitsabstand und Aperturdurchmessern erfolgen. Demgegenüber führt eine Modenblende mit einem großen Lochdurchmesser dazu, daß auch in höheren transversalen Moden Strahlung emittiert wird. In diesem Fall besitzt der Strahl ein größeres Strahlparameterprodukt. Es können so bei gleicher Auslegung des optischen Systems nur noch entsprechend größere Fokusdurchmesser erzielt werden.

Bei der oben beschriebenen Vorrichtung kann deshalb durch die Variation der Modenblende in dem Laser 1 mittels der Schaltvorrichtung 8 die Fokussierbarkeit der Laserstrahlung verändert werden. Dadurch kann ein Verfahren zum schichtweisen generativen Herstellen eines dreidimensionalen Objektes unter Einwirkung von Laserstrahlung an den jeweiligen, dem Querschnitt des Objekts in einer Schicht entsprechenden Stellen optimiert werden. Bei einem derartigen Verfahren findet abwechselnd ein Aufbringen einer Schicht eines Aufbaumaterials auf einen Träger oder eine zuvor aufgetragene Schicht und ein selektives Verfestigen von Bereichen dieser Schicht mittels Laserstahlung statt. Dabei kann durch Variieren des Durchmessers des Laserstrahls am Auftreffpunkt auf die Schicht ein optimaler Kompromiß zwischen Belichtungszeit und Strukturgenauigkeit beim Verfestigen erzielt werden, wie anhand von Fig. 2 gezeigt werden soll.

Fig. 2 zeigt beispielhaft einen zu verfestigenden Bereich 24 einer Schicht, der einem Querschnitt eines herzustellenden Objektes entspricht. Während der Verfestigung wird der Bereich 24 in einen Randbereich bzw. Konturbereich 25 und einen inneren Bereich 26 unterteilt.

Im Randbereich 25 ist es wichtig, feine Strukturen auflösen zu können. Aus diesem Grunde ist es von Vorteil, wenn der Laserstrahlfokus in diesem Bereich so klein wie möglich gewählt werden kann. Daher wird zum Verfestigen des Randbereichs 25 der Laserstrahl auf diesen Bereich gerichtet und mittels der Schalteinheit eine kleine Modenblende 3 gewählt. Damit emittiert der Laser 1 nur mehr den Gaußschen Grundmode, wodurch der auf die Schicht auftreffende Laserstrahl einen kleinen Fokusdurchmesser 1 aufweist. Ohne Veränderungen an der Fokussiereinheit 6 vornehmen zu müssen, führt allein die Wahl einer kleinen Modenblende 3 dazu, daß infolge der besseren Fokussierbarkeit der Strahlung ein kleiner Fokusdurchmesser vorhanden ist. Um einen ausreichend hohen Energieeintrag in den im Randbereich zu verfestigenden Werkstoff zu gewährleisten, kann die Verfahrgeschwindigkeit des Laserstrahls herabgesetzt werden. Dies ist aufgrund des in der Regel wesentlich geringeren Flächenanteils des Randbereichs gegenüber dem inneren Bereich ohne eine nennenswerte Prozeßverlangsamung möglich.

In dem inneren Bereich 26 müssen nicht so feine Strukturen aufgelöst werden, wie in dem Randbereich 25. Weiterhin ist in der Regel die Fläche des inneren Bereichs 26 wesentlich größer als jene des Randbereichs 25. Daher ist es vorteilhaft, für den inneren Bereich 26 einen größeren Strahlfokus zu wählen als für den Randbereich 25, um die Verfestigungszeit für den inneren Bereich möglichst kurz zu gestalten. Ohne Veränderungen an der Fokussiereinheit 6 vornehmen zu müssen, wird zu diesem Zweck mittels der Schaltvorrichtung 8 eine Modenblende 3 mit einem größerem Öffnungsdurchmesser als jene für die Belichtung des Randbereichs 25 gewählt. Dies führt zu dem Vorhandensein von Moden höherer Ordnung in der Strahlung. Diese läßt sich dann nicht mehr so gut fokussieren, jedoch erhöht sich die Gesamtleistung der Strahlung. Da beim Belichten großflächiger Bereiche eine kurze Gesamtbelichtungszeit angestrebt wird, ist es gerade vorteilhaft, mit einem nicht so stark fokussierten, dafür aber eine höhere Intensität besitzenden Strahl zu arbeiten. Die Strahlqualität ist bei Verwendung einer größeren Modenblende 3 verringert. Das spielt im inneren Bereich, der oftmals mit der "Hatch"-Technik belichtet wird, nur eine untergeordnete Rolle. Die Umschaltung von der kleineren auf die größere Modenblende und umgekehrt erfolgt durch ein schnelles Schaltelement, um der Prozeßgeschwindigkeit Rechnung zu tragen.

Dadurch dass der Strahlfokus mittels der Modenblende 3 variiert wird, ist die Fokussierung mittels der Fokussiereinheit 6 stark vereinfacht. Der Strahlfokus kann somit auch ohne variable Fokussieroptik durch Wechsel der Modenblende variiert werden. Die Fokussiereinheit ist fest auf eine vorher bestimmte optimale Einstellung (Fokussierung) festgelegt.

Weiterhin läßt sich mit dem oben beschriebenen Verfahren ein Geschwindigkeitsvorteil beim Verfestigen einer Schicht erzielen. Würde der Strahlfokus lediglich mittels der Fokussiereinheit 6 eingestellt, so wäre das Resultat stets eine größere Energiedichte des Strahls mit kleinerem Fokusdurchmesser gegenüber jenem mit größerem Fokusdurchmesser. Um zur Verfestigung an allen Stellen stets die gleiche Energiemenge in die Schicht einzubringen, müßte also die Energiedichte des Strahls mit kleinerem Fokusdurchmesser durch Drosselung der Laserenergie reduziert werden oder der Strahl mit dem kleineren Fokusdurchmesser schneller bewegt werden als jener mit dem größeren Fokusdurchmesser. Aufgrund der Flächenverhältnisse, ist jedoch die Zielsetzung gerade umgekehrt: Der Strahl mit größerem Fokusdurchmesser sollte aufgrund der verglichen zu dem Randbereich 25 größeren Fläche des inneren Bereichs 26 schneller bewegt werden als der Strahl mit kleinerem Fokusdurchmesser.

Eine Vergrößerung der Modenblende in dem Laser hat demgegenüber den Effekt, dass die Leistung der Strahlung erhöht wird, da die Strahlung zusätzliche Moden enthält. Somit wirkt die Verwendung einer Modenblende einer Verringerung der Energiedichte des Strahls durch ein Defokussieren entgegen, wodurch der Strahl mit größerem Fokusdurchmesser schneller bewegt werden kann und sich die Verfestigungszeit verringert.

Eine Veränderung der Modenzusammensetzung über Modenblenden kann auch zum Zwecke der Erzeugung eines gewünschten Energieeintrags vorgenommen werden. Es kann z.B. wünschenswert sein, bestimmte räumliche Bereiche stärker zu belichten, beispielsweise um eine höhere Werkstoffdichte zu erzielen.

In einer zweiten Ausführungsform wird während der Verfestigung zusätzlich eine Veränderung an der fokussierenden Optik 6 vorgenommen. Dadurch wird der Spielraum bei der Wahl eines geeigneten Durchmessers des Strahlfokus gegenüber der ersten Ausführungsform erhöht.

In einer weiteren Ausführungsform kann während der Belichtung auch der Aufweitefaktor der Strahlung durch die Strahlaufweitungsvorrichtung 4 verändert werden. Dadurch wird ein zusätzlicher Freiheitsgrad bei der Einstellung des Foküsdurchmesser gewonnen.

Natürlich ist es auch denkbar, mehr als zwei unterschiedliche Modenblenden zu verwenden. Daran angepaßt können dann mehr als zwei unterschiedliche Strahldurchmesser gewählt werden.

Ferner kann es in bestimmten Fällen auch zweckmäßig sein, während der Belichtung durch in Durchmesser oder geometrischer Form unterschiedliche Modenblenden unterschiedliche Modenzusammensetzungen höherer Ordnung zu erzeugen.

## Patentansprüche

1. Vorrichtung zum schichtweisen Herstellen eines dreidimensionalen Objektes mittels selektiven Verfestigens an den dem Querschnitt des Objekts entsprechenden Stellen in einer Schicht eines Aufbaumaterials unter Verwendung eines Lasers, mit einem Laser (1) und
einer Fokussiereinheit (6) zum Bündeln der Laserstrahlung,
**dadurch gekennzeichnet, daß** der Laser (1) eine Vorrichtung (8) zum Verändern der Modenzusammensetzung der Laserstrahlung aufweist.

2. Vorrichtung nach Anspruch 1 , **dadurch gekennzeichnet, daß** die Vorrichtung (8) zum Verändern der Modenzusammensetzung wenigstens eine Modenblende (3) aufweist.

3. Vorrichtung nach Anspruch 1 oder 2, **gekennzeichnet durch** eine Einheit zur Strahlaufweitung (4).

4. Verfahren zum schichtweisen Herstellen eines dreidimensionalen Objektes unter Einwirkung von Laserstrahlung an den jeweiligen dem Querschnitt des Objekts in einer Schicht entsprechenden Stellen, **dadurch gekennzeichnet, daß** der Laser während der Herstellung mit einstellbarer Modenzusammensetzung betrieben wird.

5. Verfahren nach Anspruch 4, **dadurch gekennzeichnet, daß** die Modenzusammensetzung zum Erzeugen eines gewünschten Energieeintrags geändert wird.

6. Verfahren nach Anspruch 4 oder 5, **dadurch gekennzeichnet, daß** die Modenzusammensetzung in Abhängigkeit vom Ort auf der Schicht, in dem die Laserstrahlung einwirkt, auf einen Mode geringerer Ordnung, bevorzugt den Grundmode geändert wird.

7. Verfahren nach einem der Ansprüche 4 bis 6, **dadurch gekennzeichnet, daß** in einem Randbereich eines Teilbereichs einer Schicht, auf den die Laserstrahlung einwirkt, die Modenzusammensetzung auf die Grundmode beschränkt wird und in einem Innenbereich des Teilbereichs die Modenzusammensetzung neben der Grundmode noch Moden höherer Ordnung enthält.

8. Verfahren nach einem der Ansprüche 4 bis 7, **dadurch gekennzeichnet, daß** die Laserstrahlung vor dem Einwirken fokussiert wird.

9. Verfahren nach Anspruch 8, **dadurch gekennzeichnet, daß** die Fokussierung der Laserstrahlung in Abhängigkeit von der Modenzusammensetzung vorgenommen wird.

10. Verfahren nach Anspruch 9, **dadurch gekennzeichnet, daß** in einem Randbereich eines Teilbereichs einer Schicht, auf den die Laserstrahlung einwirkt, die Laserstrahlung stärker fokussiert wird als in einem Innenbereich des Teilbereichs.

11. Verfahren nach einem der Ansprüche 4 bis 10, **dadurch gekennzeichnet, daß** die Modenzusammensetzung in Abhängigkeit von einer Geschwindigkeit, mit der der fokussierte Strahl über die Schicht bewegt wird, verändert wird.

## Claims

1. Device for layer-wise manufacturing a three-dimensional object by selective solidification of a building material at locations in a layer corresponding to the cross-section of the object by use of a laser, comprising
a laser (1) and
a focussing unit (6) for focussing the laser beam,
**characterized in that** the laser (1) comprises a device (8) for changing the modal composition of the laser beam.

2. Device according to claim 1, **characterized in that** the device (8) for changing the modal composition comprises at least one mode aperture (3).

3. Device according to claim 1 or 2, **characterized by** a unit (4) for expanding the beam.

4. Method of layer-wise manufacturing a three-dimensional object by impact of a laser beam at locations in the respective layer corresponding to the cross-section of the object, **characterized in that** the laser is operated with an adjustable modal composition during manufacturing.

5. Method according to claim 4, **characterized in that** the modal composition is changed to generate a desired application of energy.

6. Method according to claim 4 or 5, **characterized in that** the modal composition is changed in accordance to the position on the layer, in which the laser beam is applied, to a mode of lower order, preferably to the fundamental mode.

7. Method according to any one of claims 4 to 6, **characterized in that,** in a peripheral area of a partial area of a layer, in which the laser beam is applied, the modal composition is restricted to the fundamental mode, and, in an inner area of the partial area, the modal composition includes modes of higher order besides the fundamental mode.

8. Method according to any one of claims 4 to 7, **characterized in that** the laser beam is focussed before application.

9. Method according to claim 8, **characterized in that** focussing of the laser beam is carried out in accordance to the modal composition.

10. Method according to claim 9, **characterized in that,** in a peripheral area of a partial area of a layer, in which the laser beam is applied, the laser beam is stronger focussed than in an inner area of the partial area.

11. Method according to any one of claims 4 to 10, **characterized in that** the modal composition is changed in accordance to a speed, by which the focussed beam is moved over the layer.

## Revendications

1. Système pour la fabrication par couches d'un objet tridimensionnel au moyen d'un laser, par solidification sélective sur les points correspondant à la section transversale de l'objet dans une couche d'un matériau structurant, avec un laser (1) et
une unité (6) de focalisation pour focaliser le rayonnement laser,
**caractérisé en ce que** le laser (1) comporte un dispositif (8) pour modifier l'assemblage des modes du rayonnement laser.

2. Système selon la revendication 1, **caractérisé en ce que** le dispositif (8) pour modifier l'assemblage des modes comporte au moins un diaphragme (3) par mode.

3. Système selon la revendication 1 ou la revendication 2, **caractérisé par** une unité pour l'évasement (4) du faisceau.

4. Procédé pour la fabrication par couches d'un objet tridimensionnel sous l'effet d'un rayonnement laser sur les différents points correspondant à la section transversale de l'objet dans une couche, **caractérisé en ce que** le laser est mis en service avec un assemblage de modes réglable en cours de fabrication.

5. Procédé selon la revendication 4, **caractérisé en ce que** l'assemblage de modes est modifié pour générer un apport d'énergie souhaité.

6. Procédé selon la revendication 4 ou la revendication 5, **caractérisé en ce que** l'assemblage de modes est changé en un mode d'ordre inférieur, de préférence le mode fondamental, en fonction de l'emplacement sur la couche où agit le rayonnement laser.

7. Procédé selon l'une des revendications 4 à 6, **caractérisé en ce que** l'assemblage de modes est limité au mode fondamental dans une plage de bordure d'une zone partielle d'une couche, sur laquelle agit le rayonnement laser, et **en ce que** dans une plage intérieure de la zone partielle, l'assemblage de modes contient des modes d'ordre supérieur en plus du mode fondamental.

8. Procédé selon l'une des revendications 4 à 7, **caractérisé en ce que** le rayonnement laser est focalisé avant d'agir.

9. Procédé selon la revendication 8, **caractérisé en ce que** la focalisation du rayonnement laser est réalisée en fonction de l'assemblage de modes.

10. Procédé selon la revendication 9, **caractérisé en ce que** dans une plage de bordure d'une zone partielle d'une couche, sur laquelle agit le rayonnement laser, ledit rayonnement laser est focalisé avec une intensité supérieure que dans une plage intérieure de la zone partielle.

11. Procédé selon l'une des revendications 4 à 10, **caractérisé en ce que** l'assemblage de modes est modifié en fonction d'une vitesse à laquelle le faisceau focalisé est déplacé au-dessus de la couche.
